# EUROPÄISCHE PATENTSCHRIFT

(11) **EP 2 709 890 B1**
(45) Veröffentlichungstag und Bekanntmachung des Hinweises auf die Patenterteilung: **02.08.2017**
(21) Anmeldenummer: 12724894.6
(22) Anmeldetag: 09.05.2012
(51) Int. Cl.: B60W 30/18, B60L 15/20

(54) **VERFAHREN FÜR EIN FAHRZEUG MIT EINER ELEKTRISCHEN MASCHINE**
METHOD FOR A VEHICLE HAVING AN ELECTRIC MACHINE
PROCÉDÉ POUR UN VÉHICULE DOTÉ D'UN MOTEUR ÉLECTRIQUE

(30) Priorität: 19.05.2011 DE 102011101992
(43) Veröffentlichungstag der Anmeldung: 26.03.2014
(73) Patentinhaber: Volkswagen Aktiengesellschaft, 38436 Wolfsburg (DE)
(72) Erfinder: WEISS, Norbert, 38173 Sickte (DE); THIAMTONG, Vasoontara, 38442 Wolfgsburg (DE); AUER, Richard, 38442 Wolfsburg (DE)
(86) Internationale Anmeldenummer: PCT/EP2012/001984
(87) Internationale Veröffentlichungsnummer: WO 2012/156043

(56) Entgegenhaltungen:
- EP-A1- 2 055 546
- WO-A1-98/31559
- WO-A1-02/085661
- CN-A- 101 966 822
- US-B1- 6 321 144

## Beschreibung

Die vorliegende Erfindung betrifft ein Verfahren für ein Fahrzeug mit einer elektrischen Maschine, insbesondere ein Verfahren für ein Elektrofahrzeug oder ein Hybridfahrzeug, sowie ein entsprechendes Fahrzeug.

Bei einem Fahrzeug mit einer elektrischen Maschine als Antriebsmaschine, wie zum Beispiel einem Elektrofahrzeug oder einem Hybridfahrzeug, bestehen gegenüber einem Fahrzeug mit einem Verbrennungsmotor als Antriebsmotor verschiedene Verhaltens- und Bedienungsunterschiede. Dies betrifft beispielsweise einen Betrieb des Fahrzeugs bei niedrigen Geschwindigkeiten, da ein Elektromotor prinzipiell mit beliebig niedrigen Drehzahlen betrieben werden kann, wohingegen ein Verbrennungsmotor üblicherweise nur in einem Bereich oberhalb einer vorbestimmten Leerlaufdrehzahl betrieben werden kann. Ein weiteres Beispiel ist der Schubbetrieb, bei welchem bei einem Elektrofahrzeug aufgrund einer Rekuperation eine unterschiedliche Verzögerung auftreten kann. Da die meisten Fahrzeugbenutzer nur das Verhalten von Fahrzeugen mit Verbrennungsmotoren gewohnt sind, kann ein Benutzer eines Elektrofahrzeugs oder eines Hybridfahrzeugs durch das unterschiedliche Verhalten irritiert werden oder es kann sogar aufgrund des unterschiedlichen Verhaltens zu gefährlichen Situationen kommen. In dem Stand der Technik sind daher verschiedene Verfahren bekannt, um das Verhalten eines Fahrzeugs mit einem Elektroantrieb an das Verhalten eines Fahrzeugs mit einem Verbrennungsmotor anzugleichen.

Beispielsweise wird in der Druckschrift DE 10 2007 055 785 A1 ein Verfahren zur Steuerung eines Kriechbetriebs eines Fahrzeugs mit einem Hybridantrieb offenbart, um einen effizienten, zeitlich weitgehend unbegrenzten und dennoch zuverlässigen Kriechbetrieb zu ermöglichen, bei dem ein elektrischer Energiespeicher möglichst wenig beansprucht wird. Dazu umfasst ein Antriebsstrang im Wesentlichen einen Verbrennungsmotor, eine elektrische Maschine, ein zwischen dem Verbrennungsmotor und der elektrischen Maschine angeordnetes Schaltelement, ein Getriebe und einen Abtrieb. Bei laufendem Verbrennungsmotor wird zur Realisierung des Kriechbetriebs primär das Schaltelement und sekundär, in Abhängigkeit einer Überwachung vorgegebener Betriebsparameter des Schaltelements, die elektrische Maschine eingesetzt.

Die DE 199 21 918 C2 betrifft eine Parksperre für ein Fahrzeug mit elektrischem Antrieb. Die Parksperre umfasst eine mechanische und eine elektrische Komponente. Die mechanische Komponente kann bei Betätigung der Parksperre mit einem elektrischen Antriebsstrang mechanisch in Wirkverbindung gebracht werden, um dessen Drehbewegung zu stoppen. Die elektrische Komponente ist derart ausgebildet, dass sie bei Betätigungsabsicht der Parksperre zumindest zeitweilig einen Kurzschluss in einer Statorwicklung der elektrischen Maschine erzeugen kann.

Die DE 10 2008 053 505 A1 betrifft ein Verfahren zur Steuerung eines Hybridantriebsstrangs eines Kraftfahrzeugs, um beim Öffnen und Schließen einer Kupplung einer komfortablen Radmomentenverlauf zu erreichen. Die Kupplung ist in einem Hybridantriebsstrang angeordnet und weist einen Kupplungseingang und einen Kupplungsausgang auf. Kupprungseingangsseitig weist der Hybridantriebsstrang einen Verbrennungsmotor auf. Kupplungsausgangsseitig weist der Hybridantriebsstrang ein Getriebe sowie mindestens eine Elektromaschine auf. Bei Erreichen eines Synchrondrehzahlbereichs zwischen dem Kupplungseingang und dem Kupplungsausgang wird die Kupplung sprungartig geschlossen.

Die WO 98/31559 A1 betrifft eine Antriebsstrangsteuerung für ein Hybridfahrzeug. Wenn der Antriebsstrang ein Bremsmoment bereitstellt, wird dieses Bremsmoment von einer Fahrzeugsteuereinheit abhängig von der Fahrzeuggeschwindigkeit und einer Gaspedalposition gesteuert. Ein Bremsmoment wird im Allgemeinen so gesteuert, dass es die gewünschten Fahreigenschaften bereitstellt und das Bremsmoment, welches von dem Motor bereitgestellt wird, wird üblicherweise verwendet, um die Fahrzeugbatterie aufzuladen. Wenn eine Kupplung ausgekuppelt wird, hat die Fahrzeugsteuereinheit ein Zielbremsmoment, welches sie versucht, für die Räder bereitzustellen. Sie steuert daher den Motor so an, dass er das gesamte gewünschte Bremsmoment bereitstellt. Wenn ein Kupplungssensor ein Signal zu der Fahrzeugsteuereinheit sendet, dass die Kupplung eingekuppelt wird, kehrt die Fahrzeugsteuereinheit zu ihrem normalen Betrieb zurück, wodurch das gewünschte Moment von dem Verbrennungsmotor und dem Elektromotor bereitgestellt wird.

EP 2 055 546 A1 offenbart ein Verfahren mit den Merkmalen des Oberbegriffs des Anspruchs 1 und ein Fahrzeug mit den Merkmalen des Oberbegriffs des Anspruchs 14.

Bei Fahrzeugen mit einer elektrischen Maschine als Antriebsmaschine, beispielsweise Elektrofahrzeugen oder Hybridfahrzeugen, wird häufig aus Effizienzgründen die elektrische Maschine direkt mit der angetriebenen Achse ohne Trennkupplung gekoppelt. Dies führt dazu, dass ein Fahrer den Antrieb nicht wie bei einem Fahrzeug mit Verbrennungsmotor über eine Trennkupplung vom Abtrieb (Achse und Rad) physisch trennen kann. Trotzdem wird auch bei Fahrzeugen mit einer elektrischen Antriebsmaschine üblicherweise ein Wählhebel für den Fahrer bereitgestellt, welcher, vergleichbar mit einem Automatikgetriebe, zumindest die Wählhebelstellungen D für eine Vorwärtsfahrt, R für eine Rückwärtsfahrt und N als Neutralzustand oder ein "sicherer Zustand", in welchem kein Moment von dem Antriebsmotor zu den Rädern übertragen wird, aufweist. Somit kann der Fahrer, welcher einen momentenfreien Zustand im Antrieb des Fahrzeugs einstellen möchte, dies in gewohnter Art und Weise durchführen, indem er den Wählhebel auf N einstellt. Diese Funktion im elektrisch angetriebenen Fahrzeug in Kombination mit der Tatsache, dass bei einem elektrisch angetriebenen Fahrzeug über die elektrische Maschine über Rekuperationsmomente effektiv Bremsmomente auf die Räder ausgeübt werden, führt dazu, dass bei einem Wechsel von D oder R nach N dieses Bremsmoment wegzuschalten ist. Der Wechsel von D oder R nach N kann beispielsweise beim Rangieren oder während einer normalen Fahrt auftreten. Rollt das Fahrzeug bei dem Wechsel oder ist bei dem Wechsel gleichzeitig die Bremse des Fahrzeugs betätigt, erscheint dem Fahrer das Wegschalten des Bremsmoments wie eine Beschleunigung, da die gesamte Verzögerungswirkung verringert wird. Dies kann von dem Fahrer als unangenehm oder irritierend aufgefasst werden und in kritischen Situationen ein Sicherheitsrisiko darstellen.

Aufgabe der vorliegenden Erfindung ist es daher, einen verbesserten Betrieb eines Fahrzeugs mit einer elektrischen Antriebsmaschine bereitzustellen.

Diese Aufgabe wird gemäß der vorliegenden Erfindung durch ein Verfahren für ein Fahrzeug mit einer elektrischen Maschine nach Anspruch 1 und ein Fahrzeug nach Anspruch 14 gelöst. Die abhängigen Ansprüche definieren bevorzugte und vorteilhafte Ausführungsformen der vorliegenden Erfindung.

Gemäß der vorliegenden Erfindung wird ein Verfahren für ein Fahrzeug mit einer elektrischen Maschine bereitgestellt. Die elektrische Maschine ist mit mindestens einem Rad des Fahrzeugs gekoppelt. Die elektrische Maschine kann das Rad in Abhängigkeit einer eingestellten Betriebsart antreiben, abbremsen oder unbeeinflusst lassen. Das Fahrzeug ist wahlweise zumindest in einer ersten Betriebsart und einer zweiten Betriebsart betreibbar. Die erste Betriebsart ist beispielsweise eine Fahrstufeneinstellung für eine Vorwärtsfahrt oder eine Rückwärtsfahrt des Fahrzeugs und die zweite Betriebsart ist beispielsweise eine Fahrstufeneinstellung für einen Freilauf des mindestens einen mit der elektrischen Maschine gekoppelten Rads des Fahrzeugs. Anders ausgedrückt ist die erste Betriebsart beispielsweise eine Fahrstufeneinstellung D oder R und die zweite Betriebsart eine Fahrstufeneinstellung N eines Fahrstufenwählhebels des Fahrzeugs. Weitere Betriebsarten oder Fahrstufeneinstellungen können vorhanden sein, welche jedoch im Zusammenhang nachfolgend nicht näher betrachtet werden. In der ersten Betriebsart übt die elektrische Maschine ein Drehmoment auf das mindestens eine Rad aus und in der zweiten Betriebsart übt die elektrische Maschine kein Drehmoment auf das mindestens eine Rad aus. Das in der ersten Betriebsart ist das auf das mindestens eine Rad ausgeübte Drehmoment ist beispielsweise ein Drehmoment zum Antreiben des Fahrzeugs in einer Vorwärtsrichtung oder Rückwärtsrichtung, oder ein so genanntes Schubmoment, welches entgegen einer Rollrichtung des Fahrzeugs wirkt. Das Schubmoment kann mithilfe der elektrischen Maschine beispielsweise in elektrische Energie umgewandelt werden, welche einem Energiespeicher des Fahrzeugs zugeführt werden kann. Ein solches Schubmoment wird auch als Rekuperationsmoment bezeichnet. Bei dem erfindungsgemäßen Verfahren wird eine Anforderung für eine Umstellung zwischen der ersten und der zweiten Betriebsart erfasst, d.h. es wird eine Anforderung von beispielsweise D nach N oder eine Anforderung von R nach N erfasst. Wenn die Anforderung zur Umstellung von der ersten Betriebsart in die zweite Betriebsart erfasst wurde, wird das Fahrzeug in einer Übergangsbetriebsart betrieben. In der Übergangsbetriebsart wird zumindest für eine vorbestimmte Zeit ein Drehmoment auf das mindestens eine Rad ausgeübt. Das Drehmoment der Übergangsbetriebsart wirkt einer Rollrichtung des Fahrzeugs entgegen. Anders ausgedrückt wird nach einer Anforderung zur Umstellung von beispielsweise D nach N oder einer Umstellung von R nach N nicht sofort in die zweite Betriebsart, in welcher kein Drehmoment auf das mindestens eine Rad ausgeübt wird, umgeschaltet, sondern zunächst in eine Übergangsbetriebsart umgeschaltet, in welcher für eine vorbestimmte Zeit ein Drehmoment entgegen der Rollrichtung des Fahrzeugs auf das mindestens eine Rad ausgeübt wird. Das mindestens eine Rad kann beispielsweise genau ein Rad des Fahrzeugs umfassen, wenn das Fahrzeug beispielsweise mehrere elektrische Maschinen umfasst, die jeweils genau einem Rad zugeordnet sind, oder das mindestens eine Rad kann beispielsweise zwei Räder einer Achse des Fahrzeugs oder alle Räder des Fahrzeugs umfassen, wenn die zwei Räder einer Achse bzw. alle Räder des Fahrzeugs über entsprechende Getriebe und Antriebswellen mit der elektrischen Maschine gekoppelt sind.

Indem das Fahrzeug nicht direkt von der ersten Betriebsart in die zweite Betriebsart umgeschaltet wird, sondern zunächst von der ersten Betriebsart in eine Übergangsbetriebsart umgeschaltet wird, in welcher zumindest für eine vorbestimmte Zeit ein Drehmoment entgegen einer Rollrichtung des Fahrzeugs auf das mindestens eine Rad ausgeübt wird, kann beispielsweise bei einem schnellen Wechsel von D nach R über N oder von R nach D über N ein in der ersten Betriebsart anliegendes Rekuperationsmoment kurzzeitig auch in N gehalten werden, so dass keine für den Fahrer unerwartete Verringerung der Bremswirkung auftritt. Darüber hinaus wird dem Fahrer bei einer versehentlichen Schaltung von D nach N oder von R nach N Zeit gegeben, durch Verstärken des Bremsdrucks auf die übliche hydraulische Bremse während der Übergangsbetriebsart ein Bremsmoment aufzubauen, welches zumindest einem Rekuperationsmoment in der vorherigen Betriebsart D oder R entspricht.

Gemäß einer Ausführungsform wird in der Übergangsbetriebsart ferner bestimmt, ob die vorbestimmte Zeit abgelaufen ist, und, wenn bestimmt wurde, dass die vorbestimmte Zeit abgelaufen ist, wird das Fahrzeug in der zweiten Betriebsart betrieben. Die vorbestimmte Zeit beträgt beispielsweise maximal eine Sekunde. Indem die vorbestimmte Zeit für die Übergangsbetriebsart maximal eine Sekunde beträgt, und danach automatisch, sofern keine andere Anforderung für eine Umstellung in eine andere Betriebsart angefordert wurde, in die zweite Betriebsart umgestellt wird, kann die zweite Betriebsart sicher und zuverlässig in akzeptabler Zeit erreicht werden. Da in der Übergangsbetriebsart nur ein Drehmoment entgegen einer Rollrichtung des Fahrzeugs auf das Rad ausgeübt wird, können im Vergleich zu einem direkten Schalten in die zweite Betriebsart, in welcher kein Drehmoment auf das Rad ausgeübt wird, gefährliche Situationen vermieden werden, welche durch den unerwarteten Wegfall eines Brems- oder Rekuperationsdrehmoments entstehen können.

Gemäß einer Ausführungsform wird das Fahrzeug nur dann in der Übergangsbetriebsart betrieben, wenn eine Anforderung zur Umstellung von der ersten Betriebsart in die zweite Betriebsart erfasst wird und zusätzlich in der ersten Betriebsart das durch die elektrische Maschine ausgeübte Drehmoment einer Rollrichtung des Fahrzeugs entgegenwirkt. Somit wird die Übergangsbetriebsart nur dann verwendet, wenn das Fahrzeug in der ersten Betriebsart, also in D oder R, bereits ein Brems- oder Rekuperationsdrehmoment auf das mindestens eine Rad gewirkt hat. Wenn das Fahrzeug hingegen in der ersten Betriebsart von der elektrischen Maschine beschleunigt oder zumindest auf Geschwindigkeit gehalten wurde oder wenn das Fahrzeug in der ersten Betriebsart ohne Brems- oder Rekuperationsdrehmoment rollte, wird nach einer Anforderung für eine Umstellung zwischen der ersten und zweiten Betriebsart sofort in die zweite Betriebsart umgeschaltet, d.h. ein eventuelles Vortriebsmoment wird nicht gehalten, sondern sofort weggeschaltet. Dadurch ergibt sich für den Fahrer ein erwartungsgemäßes Verhalten des Fahrzeugs.

Gemäß einer weiteren Ausführungsform wird das Fahrzeug nur dann in der Übergangsbetriebsart betrieben, wenn eine Anforderung zur Umstellung von der ersten Betriebsart in die zweite Betriebsart erfasst wird und gleichzeitig ein Bremspedal des Fahrzeugs betätigt ist. Wenn der Fahrer das Fahrzeug beispielsweise in eine Parklücke rangiert oder beispielsweise auf eine rote Ampel zufährt, kann der Fall auftreten, dass während die Bremse des Fahrzeugs betätigt ist, von der ersten Betriebsart in die zweite Betriebsart umgeschaltet werden soll, also der Wählhebel beispielsweise von D nach N bewegt wird. Da bei betätigtem Bremspedal in der ersten Betriebsart üblicherweise ein Rekuperationsdrehmoment auf das mindestens eine Rad wirkt, würde dieses bremsende Drehmoment bei einem direkten Umschalten in die zweite Betriebsart entfallen und somit ein Teil der Bremswirkung des Fahrzeugs wegfallen. Um diese kritische Situation zu entschärfen, wird daher das Fahrzeug zunächst in der Übergangsbetriebsart betrieben, in welcher weiterhin ein Drehmoment entgegen der Rollrichtung des Fahrzeugs auf das mindestens eine Rad ausgeübt wird.

Gemäß einer weiteren Ausführungsform wird das Drehmoment in der Übergangsbetriebsart von der elektrischen Maschine auf das mindestens eine Rad ausgeübt. Alternativ oder zusätzlich kann in der Übergangsbetriebsart das Drehmoment auf das mindestens eine Rad von einer Bremseinrichtung des Fahrzeugs, beispielsweise einer hydraulischen Bremseinrichtung, ausgeübt werden. Das Drehmoment kann beispielsweise in Abhängigkeit von dem Drehmoment in der ersten Betriebsart eingestellt werden. Wenn das Drehmoment von der elektrischen Maschine ausgeübt wird, kann die daraus gewonnene Energie über die elektrische Maschine in einen Energiespeicher des Fahrzeugs rückgespeist werden, wodurch Energie eingespart werden kann und die Reichweite des Fahrzeugs vergrößert werden kann. Durch Verwenden der Bremseinrichtung des Fahrzeugs in der Übergangsbetriebsart kann das Drehmoment schnell und präzise auf einen gewünschten Wert eingestellt werden. Indem das Drehmoment in der Übergangsbetriebsart in Abhängigkeit von dem Drehmoment in der ersten Betriebsart eingestellt wird, kann ein sanfter Drehmomentübergang zwischen der ersten Betriebsart und der Übergangsbetriebsart erreicht werden. Weiterhin kann das Drehmoment in der Übergangsbetriebsart in Abhängigkeit von dem Drehmoment in der ersten Betriebsart und einem vorbestimmten maximalen Rekuperationsdrehmoment eingestellt werden.

Gemäß einer weiteren Ausführungsform kann das Drehmoment in der Übergangsbetriebsart einen vorbestimmten Drehmomentverlauf aufweisen. Der vorbestimmte Drehmomentverlauf kann einen ersten Anteil mit einem im Wesentlichen konstanten Drehmoment und einen zweiten Anteil mit einem betragsmäßig geringer werdenden Drehmoment umfassen. Somit kann beispielsweise ein Rekuperationsdrehmoment, welches in der ersten Betriebsart auf das mindestens eine Rad ausgeübt wurde, langsam ausgeblendet werden, so dass die Verminderung des Bremsmoments nach dem Umschalten für den Fahrer beherrschbar bleibt. Durch den ersten Anteil mit einem im Wesentlichen konstanten Drehmoment kann eine kurze temporäre Anforderung für eine Umstellung in die zweite Betriebsart, beispielsweise bei einem Umschalten von einer Vorwärtsfahrt in eine Rückwärtsfahrt, also bei einem Umschalten von D über N in R, ohne eine Änderung des Drehmoments und somit ruckfrei durchgeführt werden.

Gemäß einer weiteren Ausführungsform übt in der Übergangsbetriebsart die elektrische Maschine das Drehmoment entgegen der Rollrichtung des Fahrzeugs auf das mindestens eine Rad aus. Das Drehmoment wird in Abhängigkeit von einer Einstellung des Bremspedals des Fahrzeugs eingestellt. So kann beispielsweise in der Übergangsbetriebsart die Reaktion des Fahrers beim Einstellen des Drehmoments berücksichtigt werden. Beispielsweise kann das von der elektrischen Maschine ausgeübte Drehmoment betragsmäßig verringert werden, wenn der Fahrer den Bremsdruck auf das Bremspedal erhöht. Dadurch kann für den Fahrer ein komfortabler Übergang zwischen der ersten Betriebsart und der zweiten Betriebsart bereitgestellt werden.

Gemäß der vorliegenden Erfindung wird weiterhin ein Fahrzeug bereitgestellt, welches eine elektrische Maschine, ein Bedienelement und eine Steuervorrichtung umfasst. Die elektrische Maschine ist mit mindestens einem Rad des Fahrzeugs gekoppelt. Das Bedienelement dient zum Erfassen einer Anforderung für eine Umstellung zwischen einer ersten und einer zweiten Betriebsart des Fahrzeugs. Das Bedienelement ist beispielsweise ein Wählhebel zum Umstellen zwischen einer Fahrbetriebsart, beispielsweise für eine Vorwärtsfahrt oder eine Rückwärtsfahrt (typischerweise Wählhebelstellungen D oder R), und einer Freilaufbetriebsart oder Neutralbetriebsart (typischerweise Wählhebelstellung N). Die Steuervorrichtung ist mit der elektrischen Maschine und dem Bedienelement gekoppelt. Die Steuervorrichtung ist ausgestaltet, die elektrische Maschine derart anzusteuern, dass die elektrische Maschine in der ersten Betriebsart ein Drehmoment auf das mindestens eine Rad ausübt und in der zweiten Betriebsart kein Drehmoment auf das mindestens eine Rad ausübt. Wenn eine Anforderung zur Umstellung von der ersten Betriebsart in die zweite Betriebsart erfasst wird, betreibt die Steuervorrichtung das Fahrzeug in einer Übergangsbetriebsart, in welcher für zumindest eine vorbestimmte Zeit ein Drehmoment auf das mindestens eine Rad ausgeübt wird. In der Übergangsbetriebsart wirkt das Drehmoment auf das mindestens eine Rad entgegen einer Rollrichtung des Fahrzeugs. Das Fahrzeug kann beispielsweise ein Elektrofahrzeug oder ein Hybridfahrzeug sein, welches von der elektrischen Maschine angetrieben wird. Gemäß einer Ausführungsform ist das Fahrzeug zur Durchführung des zuvor beschriebenen Verfahrens ausgestaltet und umfasst daher auch die im Zusammenhang mit dem Verfahren beschriebenen Vorteile.

Die vorliegende Erfindung wird nachfolgend mit Bezugnahme auf die beigefügten Figuren anhand bevorzugter Ausführungsformen beschrieben werden.
Fig. 1 zeigt schematisch ein Fahrzeug gemäß einer Ausführungsform der vorliegenden Erfindung.
Fig. 2 zeigt ein Zustandsdiagramm eines Verfahrens gemäß einer Ausführungsform der vorliegenden Erfindung.

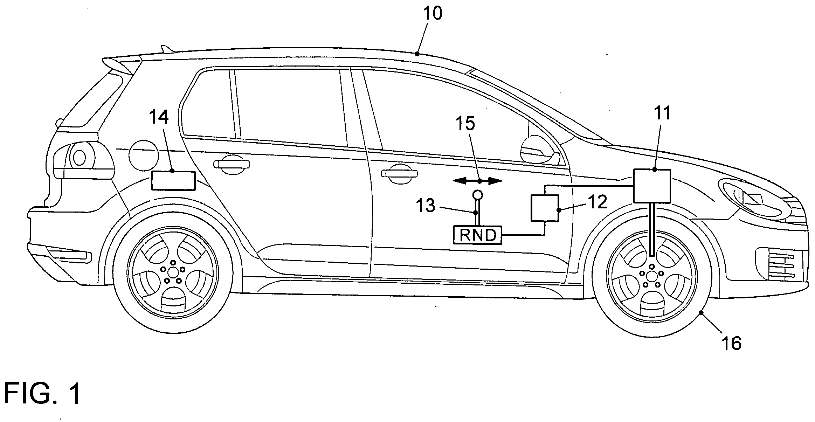

Fig. 1 zeigt ein Fahrzeug 10 mit einer elektrischen Antriebsmaschine 11, einer Steuervorrichtung 12, einem Fahrstufenwählhebel 13 und einem elektrischen Energiespeicher 14. Die elektrische Maschine 11 ist beispielsweise mit den Vorderrädern 16 des Fahrzeugs 10 gekoppelt und in der Lage, ein Drehmoment in einer antreibenden oder abbremsenden Wirkung auf die Räder 16 auszuüben. Zum Antreiben der Räder 16 entnimmt die elektrische Maschine 11 Energie aus dem elektrischen Energiespeicher 14 und bei einem Abbremsen der Räder 16 durch die elektrische Maschine 11 kann die elektrische Maschine 11 elektrische Energie in den elektrischen Energiespeicher 14 zurückspeisen. Der Fahrstufenwählhebel 13 umfasst drei Fahrstufen R, N und D, welche durch Bewegen des Wählhebels 13 in Richtung des Pfeils 15 von einem Benutzer des Fahrzeugs ausgewählt werden können. Der Fahrstufenwählhebel 13 kann weitere Einstellungsmöglichkeiten aufweisen, beispielsweise eine Stellung P zum Parken des Fahrzeugs. In der Beschreibung der vorliegenden Erfindung werden jedoch nur die vorgenannten Einstellungen R, N und D verwendet.

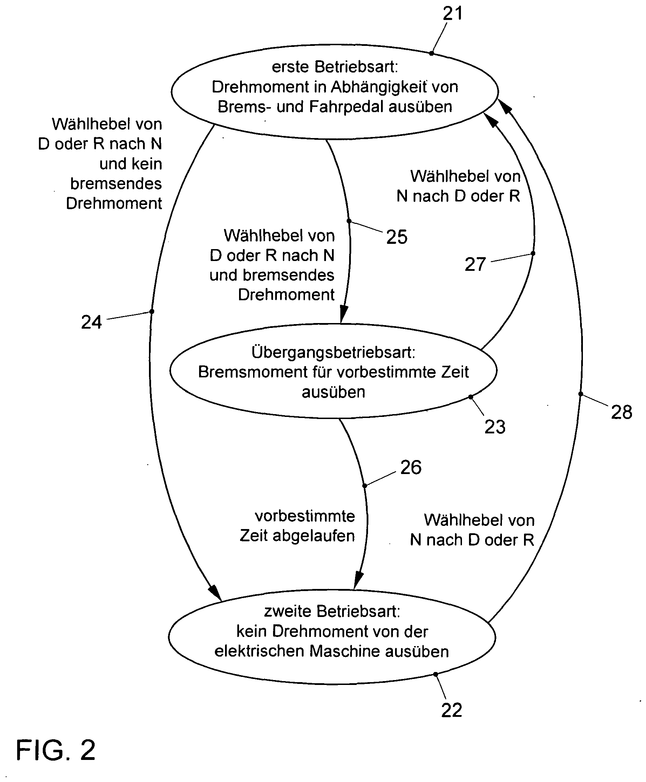

Im Zusammenhang mit Fig. 2 wird nachfolgend die Arbeitsweise des Fahrzeugs 10 beschrieben werden. Gemäß Fig. 2 kann das Fahrzeug 10 in drei Betriebsarten 21, 22 und 23 betrieben werden. Ein Betrieb in einer der Betriebsarten 21-23 wird von der Steuervorrichtung 12 gesteuert. Die Steuervorrichtung 12 kann beispielsweise einen Teil einer Motorsteuerung des Fahrzeugs 10 umfassen. In der ersten Betriebsart 21 wird in Abhängigkeit von einem Bremspedal und einem Gaspedal des Fahrzeugs, welche von einem Benutzer des Fahrzeugs betätigt werden können, ein Drehmoment von der elektrischen Maschine 11 auf die Räder 16 ausgeübt, wenn sich der Wählhebel 13 in der Stellung D oder R befindet. In der Stellung D wird ein Drehmoment in einer Vorwärtsfahrrichtung des Fahrzeugs ausgeübt und in der Stellung R ein Drehmoment in einer Rückwärtsfahrrichtung des Fahrzeugs 10 auf die Räder 16 ausgeübt. Bei einem Betätigen des Bremspedals in der ersten Betriebsart wird ein bremsendes Moment entgegen der Rollrichtung des Fahrzeugs von der elektrischen Maschine 11 auf die Räder 10 ausgeübt. Zusätzlich kann beim Betätigen des Bremspedals mittels beispielsweise einer hydraulischen Bremse des Fahrzeugs 10 ein zusätzliches Bremsmoment entgegen der Rollrichtung des Fahrzeugs auf die Räder 16 ausgeübt werden. Das bremsende Drehmoment, welches von der elektrischen Maschine 11 auf die Räder 16 ausgeübt wird, kann von der elektrischen Maschine 11 dazu verwendet werden, elektrische Energie zu erzeugen, welche in den elektrischen Energiespeicher 14 zurückgeführt wird. Daher wird dieses Bremsmoment auch als Rekuperationsmoment bezeichnet.

Wenn ausgehend von der ersten Betriebsart 21 der Wählhebel von D oder R nach N bewegt wird und kein bremsendes Drehmoment an den Rädern 16 anliegt, wird das Fahrzeug in der zweiten Betriebsart 22 betrieben (Übergang 24). In dieser Betriebsart, welche auch als Leerlaufbetriebsart oder Neutralbetriebsart bezeichnet wird, übt die elektrische Maschine 11 kein Drehmoment auf die Räder 16 aus. Demzufolge befinden sich die Räder 16 im Freilauf.

Wenn der Wählhebel in der ersten Betriebsart von D oder R nach N bewegt wird und ein bremsendes Drehmoment an den Rädern 16 anliegt, wird das Fahrzeug in der Übergangsbetriebsart 23 betrieben (Übergang 25). Das bremsende Drehmoment kann wie zuvor beschrieben beispielsweise ein Rekuperationsdrehmoment oder ein Bremsmoment von einer Bremsanlage des Fahrzeugs oder eine Kombination daraus umfassen. In der Übergangsbetriebsart 23 wird für eine vorbestimmte Zeit ein Bremsmoment von der elektrischen Maschine 11 und/oder der Bremsanlage des Fahrzeugs 10 auf die Räder 16 ausgeübt. Details bezüglich des bremsenden Drehmoments in der Übergangsbetriebsart werden nachfolgend beschrieben werden. Wenn die vorbestimmte Zeit abgelaufen ist, wird das Fahrzeug in der zweiten Betriebsart 22 wie zuvor beschrieben betrieben (Übergang 26). Wenn in der Übergangsbetriebsart der Wählhebel von N nach D oder R bewegt wird, wird die Übergangsbetriebsart abgebrochen und das Fahrzeug in der ersten Betriebsart 21 betrieben (Übergang 27). Wenn in der zweiten Betriebsart der Wählhebel von N nach D oder R bewegt wird, wird das Fahrzeug in der ersten Betriebsart 21 betrieben (Übergang 28).

Wie zuvor beschrieben wird in der Übergangsbetriebsart 23 ein Bremsmoment oder Rekuperationsmoment kurzzeitig auch in der Wählhebelstellung N gehalten, um entweder einen schnellen Wechsel von D nach R oder von R nach D über N zu überbrücken, oder um bei einer Schaltung nach N ohne Weiterschaltung nach D oder R dem Fahrer Zeit zu geben, damit er durch Erhöhen des Bremsdrucks auf die übliche hydraulische Bremse eine Verzögerung aktivieren kann, welche durch den Wegfall des Brems- oder Rekuperationsmoments beim Umschalten nach N auftritt. Somit wird für eine vorbestimmte Zeit ein Brems- oder Rekuperationsmoment auch in der Wählhebelstellung N beibehalten und innerhalb oder am Ende der vorbestimmten Zeit ausgeblendet. Ein Vortriebsmoment beim Umschalten von D oder R nach N wird nicht beibehalten, sondern immer sofort weggeschaltet.

In der Übergangsbetriebsart 23 kann das bremsende Drehmoment für die vorbestimmte Zeit beispielsweise folgendermaßen eingestellt werden:
1. Während der vorbestimmten Zeit kann ein Rekuperationsmoment auf ein vorgegebenes maximales Rekuperationsmoment oder auf das vorherige Rekuperationsmoment in der ersten Betriebsart 21 (Wählhebelstellung R oder D) eingestellt.
2. In dem vorbestimmten Zeitraum kann ein Rekuperationsmoment mit einem vorbestimmten Ausblendverlauf eingestellt werden. Der Ausblendverlauf kann beispielsweise dahingehend optimiert werden, dass ein kurzes Verweilen in N unbemerkt bleibt und längeres Verweilen in N für den Fahrer beherrschbar bleibt.
3. Es kann ein Rekuperationsmoment eingestellt werden, welches einem Rekuperationsmoment entspricht, das zuvor in der ersten Betriebsart 21 mittels des Bremspedals eingestellt wurde. Einstellbare Schleppmomente, welche ausgeübt werden, wenn weder das Bremspedal noch das Gaspedal betätigt werden, würden in diesem Fall nicht berücksichtigt werden, sondern nur das mittels des Bremspedal eingestellte Rekuperationsmoment. Wurde das Bremspedal in der ersten Betriebsart 21 nicht betätigt, würde in der Übergangsbetriebsart somit kein Bremsmoment ausgeübt werden, sondern beim Umschalten von D oder R nach N würde ein Schleppmoment in der ersten Betriebsart sofort weggenommen werden, wenn das Bremspedal nicht betätigt ist.
4. Einstellbare Schleppmomente der ersten Betriebsart 21 oder ein Bremsmoment durch Betätigen der Bremse in der ersten Betriebsart 21 werden von einem Bremssystem des Fahrzeugs, beispielsweise einem elektrohydraulischen Bremskraftverstärker, übernommen, um die vom Fahrer erwartete Bremsverzögerung bereitzustellen.

Das in der Übergangsbetriebsart eingestellte Bremsmoment oder Rekuperationsmoment führt somit zu einer Beschleunigung des Fahrzeugs entgegen der Rollrichtung des Fahrzeugs. Auf einer Ebene bedeutet dies immer eine Verringerung des Betrags der Geschwindigkeit.

## Patentansprüche

1. Verfahren für ein Fahrzeug mit einer elektrischen Maschine, wobei die elektrische Maschine (11) mit mindestens einem Rad (16) des Fahrzeugs (10) gekoppelt ist, und wobei das Fahrzeug (10) wahlweise in zumindest einer ersten Betriebsart (21) und einer zweiten Betriebsart (22) betreibbar ist, wobei die elektrische Maschine (11) in der ersten Betriebsart (21) ein Drehmoment auf das mindestens eine Rad (16) ausübt und in der zweiten Betriebsart (22) kein Drehmoment auf das mindestens eine Rad (16) ausübt, wobei das Verfahren die Schritte umfasst:
- Erfassen einer Anforderung für eine Umstellung zwischen der ersten (21) und der zweiten Betriebsart (22), und
- Betreiben des Fahrzeugs (10) in einer Übergangsbetriebsart (23), wenn die Anforderung zur Umstellung von der ersten Betriebsart (21) in die zweite Betriebsart (22) erfasst wird,
**dadurch gekennzeichnet, dass** in der Übergangsbetriebsart (23) für zumindest eine vorbestimmte Zeit ein Drehmoment auf das mindestens eine Rad (16) ausgeübt wird, welches einer Rollrichtung des Fahrzeugs (10) entgegenwirkt.

2. Verfahren nach Anspruch 1, wobei der Schritt des Betreibens des Fahrzeugs (10) in der Übergangsbetriebsart (23) ferner umfasst:
- Bestimmen, ob die vorbestimmte Zeit abgelaufen ist, und
- Betreiben des Fahrzeugs (10) in der zweiten Betriebsart (22), wenn bestimmt wurde, dass die vorbestimmte Zeit abgelaufen ist.

3. Verfahren nach Anspruch 1 oder 2, wobei die vorbestimmte Zeit maximal 1 Sekunde beträgt.

4. Verfahren nach einem der vorhergehenden Ansprüche, wobei das Fahrzeug (10) nur dann in der Übergangsbetriebsart (23) betrieben wird, wenn eine Anforderung zur Umstellung von der ersten Betriebsart (21) in die zweite Betriebsart (22) erfasst wird und in der ersten Betriebsart (21) das durch die elektrische Maschine (11) ausgeübte Drehmoment einer Rollrichtung des Fahrzeugs (10) entgegenwirkt.

5. Verfahren nach einem der Ansprüche 1-3, wobei das Fahrzeug (10) nur dann in der Übergangsbetriebsart (23) betrieben wird, wenn eine Anforderung zur Umstellung von der ersten Betriebsart (21) in die zweite Betriebsart (22) erfasst wird und ein Bremspedal des Fahrzeugs (10) betätigt ist.

6. Verfahren nach einem der vorhergehenden Ansprüche, wobei die erste Betriebsart (21) eine Fahrstufeneinstellung für eine Vorwärtsfahrt (D) oder eine Rückwärtsfahrt (R) des Fahrzeugs (10) umfasst.

7. Verfahren nach einem der vorhergehenden Ansprüche, wobei die zweite Betriebsart (22) eine Fahrstufeneinstellung für einen Freilauf (N) des mindestens einen mit der elektrischen Maschine (11) gekoppelten Rads (16) des Fahrzeugs (10) umfasst.

8. Verfahren nach einem der vorhergehenden Ansprüche, wobei die elektrische Maschine (11) in der Übergangsbetriebsart (23) das Drehmoment auf das mindestens eine Rad (16) ausübt.

9. Verfahren nach einem der vorhergehenden Ansprüche, wobei die elektrische Maschine (11) in der Übergangsbetriebsart (23) das Drehmoment auf das mindestens eine Rad (16) ausübt, wobei das das Drehmoment in Abhängigkeit von dem Drehmoment in der ersten Betriebsart (21) und einem vorbestimmten maximalen Rekuperationsdrehmoment eingestellt wird.

10. Verfahren nach einem der vorhergehenden Ansprüche, wobei das Drehmoment in der Übergangsbetriebsart (23) einen vorbestimmten Drehmomentverlauf aufweist, wobei der vorbestimmte Drehmomentverlauf einen ersten Anteil mit einem im Wesentlichen konstanten Drehmoment und einen zweiten Anteil mit einem betragsmäßig geringer werdenden Drehmoment umfasst.

11. Verfahren nach einem der vorhergehenden Ansprüche, wobei die elektrische Maschine (11) in der Übergangsbetriebsart (23) das Drehmoment auf das mindestens eine Rad (16) ausübt, wobei das Drehmoment in Abhängigkeit von einer Einstellung eines Bremspedals des Fahrzeugs (10) eingestellt wird.

12. Verfahren nach einem der vorhergehenden Ansprüche, wobei eine Bremseinrichtung des Fahrzeugs (10) in der Übergangsbetriebsart (23) das Drehmoment auf das mindestens eine Rad (16) ausübt, wobei das Drehmoment in Abhängigkeit von dem. Drehmoment in der ersten Betriebsart (21) eingestellt wird.

13. Verfahren nach einem der vorhergehenden Ansprüche, wobei die elektrische Maschine (11) ausgestaltet ist, elektrische Energie zu erzeugen, wenn das von der elektrischen Maschine (11) auf das mindestens eine Rad (16) ausgeübte Drehmoment der Rollrichtung des Fahrzeugs (10) entgegenwirkt.

14. Fahrzeug, umfassend:
- eine elektrische Maschine (11), welche mit mindestens einem Rad (16) des Fahrzeugs (10) gekoppelt ist,
- ein Bedienelement (13) zum Erfassen einer Anforderung für eine Umstellung zwischen einer ersten (21) und einer zweiten Betriebsart (22) des Fahrzeugs (10), und
- eine Steuervorrichtung (12), welche mit der elektrischen Maschine (11) und dem Bedienelement (13) gekoppelt ist, wobei die Steuervorrichtung (12) ausgestaltet ist, die elektrische Maschine (11) derart zu betreiben, dass die elektrische Maschine (11) in der ersten Betriebsart (21) ein Drehmoment auf das mindestens eine Rad (16) ausübt und in der zweiten Betriebsart (22) kein Drehmoment auf das mindestens eine Rad (16) ausübt, und wobei die Steuervorrichtung (12) das Fahrzeug (10) in einer Übergangsbetriebsart (23) betreibt, wenn eine Anforderung zur Umstellung von der ersten Betriebsart (21) in die zweite Betriebsart (22) erfasst wird,
**dadurch gekennzeichnet, dass** in der Übergangsbetriebsart (23) für zumindest eine vorbestimmte Zeit ein Drehmoment auf das mindestens eine Rad (16) ausgeübt wird, welches einer Rollrichtung des Fahrzeugs (10) entgegenwirkt.

15. Fahrzeug nach Anspruch 14, wobei das Fahrzeug (10) zur Durchführung des Verfahrens nach einem der Ansprüche 1-13 ausgestaltet ist.

## Claims

1. Method for a vehicle having an electric machine, wherein the electric machine (11) is coupled to at least one wheel (16) of the vehicle (10), and wherein the vehicle (10) can be operated optionally in at least a first operating mode (21) and a second operating mode (22), wherein in the first operating mode (21) the electric machine (11) applies a torque to the at least one wheel (16), and in the second operating mode (22) said electric machine (11) does not apply any torque to the at least one wheel (16),
wherein the method comprises the steps of:
- detecting a request for switching over between the first operating mode (21) and the second operating mode (22), and
- operating the vehicle (10) in a transition operating mode (23) if the request to switchover from the first operating mode (21) into the second operating mode (22) is detected,
**characterized in that** in the transition operating mode (23) a torque is applied for at least a predetermined time to the at least one wheel (16), which torque counteracts a rolling direction of the vehicle (10).

2. Method according to Claim 1, wherein the step of operating the vehicle (10) in the transition operating mode (23) also comprises:
- determining whether the predetermined time has expired, and
- operating the vehicle (10) in the second operating mode (22) if it has been determined that the predetermined time has expired.

3. Method according to Claim 1 or 2, wherein the predetermined time is at maximum 1 second.

4. Method according to one of the preceding claims, wherein the vehicle (10) is operated in the transition operating mode (23) only if a request to switchover from the first operating mode (21) into the second operating mode (22) is detected, and in the first operating mode (21) the torque which is applied by the electric machine (11) counteracts a rolling direction of the vehicle (10) .

5. Method according to one of Claims 1-3, wherein the vehicle (10) is operated in the transition operating mode (23) only if a request to switchover from the first operating mode (21) into the second operating mode (22) is detected and a brake pedal of the vehicle (10) is activated.

6. Method according to one of the preceding claims, wherein the first operating mode (21) comprises a drive position setting for forward travel (D) or reverse travel (R) of the vehicle (10).

7. Method according to one of the preceding claims, wherein the second operating mode (22) comprises a drive position setting for freewheeling (N) of the at least one wheel (16), coupled to the electric machine (11), of the vehicle (10).

8. Method according to one of the preceding claims, wherein in the transition operating mode (23) the electric machine (11) applies the torque to the at least one wheel (16).

9. Method according to one of the preceding claims, wherein in the transition operating mode (23) the electric machine (11) applies the torque to the at least one wheel (16), wherein the torque is set as a function of the torque in the first operating mode (21) and a predetermined maximum recalibration torque.

10. Method according to one of the preceding claims, wherein in the transition operating mode (23) the torque has a predetermined torque profile, wherein the predetermined torque profile comprises a first portion with an essentially constant torque and a second portion with a torque which becomes smaller in terms of absolute value.

11. Method according to one of the preceding claims, wherein in the transition operating mode (23) the electric machine (11) applies the torque to the at least one wheel (16), wherein the torque is set as a function of a setting of a brake pedal of the vehicle (10).

12. Method according to one of the preceding claims, wherein in the transition operating mode (23) a brake device of the vehicle (10) applies the torque to the at least one wheel (16), wherein the torque is set as a function of the torque in the first operating mode (21).

13. Method according to one of the preceding claims, wherein the electric machine (11) is configured to generate electrical energy if the torque which is applied by the electric machine (11) to the at least one wheel (16) counteracts the rolling direction of the vehicle (10).

14. Vehicle comprising:
- an electric machine (11), which is coupled to at least one wheel (16) of the vehicle (10),
- an operator control element (13) for detecting a request for switching over between a first operating mode (21) and a second operating mode (22) of the vehicle (10), and
- a control device (12) which is coupled to the electric machine (11) and to the operator control element (13), wherein the control device (12) is configured to operate the electric machine (11) in such a way that in the first operating mode (21) the electric machine (11) applies a torque to the at least one wheel (16), and in the second operating mode (22) said electric machine (11) does not apply any torque to the at least one wheel (16), and wherein the control device (12) operates the vehicle (10) in a transition operating mode (23) if a request to switchover from the first operating mode (21) into the second operating mode (22) is detected,
**characterized in that**
in the transition operating mode (23) a torque is applied for at least a predetermined time to the at least one wheel (16), which torque counteracts a rolling direction of the vehicle (10) .

15. Vehicle according to Claim 14, wherein the vehicle (10) is configured to carry out the method according to one of Claims 1-13.

## Revendications

1. Procédé pour un véhicule doté d'un moteur électrique, dans lequel le moteur électrique (11) est couplé à au moins une roue (16) du véhicule (10), et dans lequel le véhicule (10) peut être mis en fonctionnement sélectivement dans au moins un premier mode de fonctionnement (21) et un deuxième mode de fonctionnement (22), dans lequel le moteur électrique (11) exerce un couple sur ladite au moins une roue (16) dans le premier mode de fonctionnement (21) et, dans le deuxième mode de fonctionnement (22), n'exerce aucun couple sur ladite au moins une roue (16), dans lequel le procédé comprend les étapes consistant à :
- détecter une demande de basculement entre les premier (21) et deuxième modes de fonctionnement (22), et
- faire fonctionner le véhicule (10) dans un mode de transition (23) lorsque la demande de basculement du premier mode de fonctionnement (21) au deuxième mode de fonctionnement (22) est détectée,
**caractérisé en ce que**, dans le mode de fonctionnement de transition (23), un couple agissant à l'encontre d'un sens de roulement du véhicule (10) est exercé sur ladite au moins une roue (16).

2. Procédé selon la revendication 1, dans lequel l'étape consistant à faire fonctionner le véhicule (10) dans le mode de fonctionnement de transition (23) consiste en outre à :
- déterminer si le temps prédéterminé s'est écoulé, et
- faire fonctionner le véhicule (10) dans le deuxième mode de fonctionnement (22) lorsqu'il a été déterminé que le temps prédéterminé s'est écoulé.

3. Procédé selon la revendication 1 ou 2, dans lequel le temps prédéterminé est au maximum de 1 seconde.

4. Procédé selon l'une quelconque des revendications précédentes, dans lequel le véhicule (10) n'est mis en fonctionnement dans le mode de fonctionnement de transition (23) que lorsqu'une demande de basculement du premier mode de fonctionnement (21) au deuxième mode de fonctionnement (22) est détectée et lorsque, dans le premier mode de fonctionnement (21), le couple exercé par le moteur électrique (11) agit à l'encontre d'un sens de roulement du véhicule (10).

5. Procédé selon l'une quelconque des revendications 1-3, dans lequel le véhicule (10) n'est mis en fonctionnement dans le mode de fonctionnement de transition (23) que lorsqu'une demande de basculement du premier mode de fonctionnement (21) au deuxième mode de fonctionnement (22) est détectée et lorsqu'une pédale de frein du véhicule (10) est actionnée.

6. Procédé selon l'une quelconque des revendications précédentes, dans lequel le premier mode de fonctionnement (21) comprend un réglage de changement de vitesse pour une conduite en marche avant (D) ou une conduite en marche arrière (R) du véhicule (10) .

7. Procédé selon l'une quelconque des revendications précédentes, dans lequel le deuxième mode de fonctionnement (22) comprend une position de changement de vitesse correspondant à un fonctionnement en roue libre (N) the ladite au moins une roue (16) du véhicule (10) couplée au moteur électrique (11).

8. Procédé selon l'une quelconque des revendications précédentes, dans lequel, dans le mode de fonctionnement de transition (23), le moteur électrique (11) exerce le couple sur ladite au moins une roue (16).

9. Procédé selon l'une quelconque des revendications précédentes, dans lequel, dans le mode de fonctionnement de transition (23), le moteur électrique (11) exerce le couple sur ladite au moins une roue (16), dans lequel le couple est réglé en fonction du couple observé dans le premier mode de fonctionnement (21) et d'un couple de récupération maximal prédéterminé.

10. Procédé selon l'une quelconque des revendications précédentes, dans lequel, dans le mode de fonctionnement de transition (23), le couple présente une évolution de couple prédéterminée, dans lequel l'évolution de couple prédéterminée comprend une première partie dans laquelle le couple est sensiblement constant et une seconde partie dans laquelle la valeur du couple diminue.

11. Procédé selon l'une quelconque des revendications précédentes, dans lequel, dans le mode de fonctionnement de transition (23), le moteur électrique (11) exerce le couple sur ladite au moins une roue (16), dans lequel le couple est réglé en fonction d'un réglage d'une pédale de frein du véhicule (10) .

12. Procédé selon l'une quelconque des revendications précédentes, dans lequel, dans le mode de fonctionnement de transition (23), un dispositif de freinage du véhicule (10) exerce le couple sur ladite au moins une roue (16), dans lequel le couple est réglé en fonction du couple observé dans le premier mode de fonctionnement (21).

13. Procédé selon l'une quelconque des revendications précédentes, dans lequel le moteur électrique (11) est conçu pour générer de l'énergie électrique lorsque le couple exercé par le moteur électrique (11) sur ladite au moins une roue (16) agit à l'encontre du sens de roulement du véhicule (10).

14. Véhicule, comprenant :
- un moteur électrique (11) qui est couplé à au moins une roue (16) du véhicule (10),
- un élément de commande (13) destiné à détecter une demande de basculement entre des premier (21) et deuxième modes de fonctionnement (22) du véhicule (10), et
- un dispositif de commande (12) qui est couplé au moteur électrique (11) et à l'élément de commande (13), dans lequel le dispositif de commande (12) est conçu pour faire fonctionner le moteur électrique (11) de manière à ce que, dans le premier mode de fonctionnement (21), le moteur électrique (11) exerce un couple sur ladite au moins une roue (16) et, dans le deuxième mode de fonctionnement (22), n'exerce aucun couple sur ladite au moins une roue (16), et dans lequel le dispositif de commande (12) fait fonctionner le véhicule (10) dans un mode de fonctionnement de transition (23) lorsqu'une demande de basculement du premier mode de fonctionnement (21) au deuxième mode de fonctionnement (22) est détectée,
**caractérisé en ce que**, dans le mode de fonctionnement de transition (23), un couple agissant à l'encontre d'un sens de roulement du véhicule (10) est exercé sur ladite au moins une roue (16).

15. Véhicule selon la revendication 14, dans lequel le véhicule (10) est conçu pour mettre en oeuvre le procédé selon l'une quelconque des revendications 1-13.
